# EUROPÄISCHE PATENTSCHRIFT

(11) **EP 2 784 100 B1**
(45) Veröffentlichungstag und Bekanntmachung des Hinweises auf die Patenterteilung: **23.09.2015**
(21) Anmeldenummer: 14161226.7
(22) Anmeldetag: 24.03.2014
(51) Int. Cl.: C08G 18/48, C08G 18/76, C08G 18/40, C08J 9/12

(54) **Polyurethan-Hartschaumstoffe mit gleichmäßiger Zellgrößenverteilung und homogener Offenzelligkeit**
Rigid polyurethane foams with even cell size distribution and homogeneous open cell structure
Mousse rigide de polyuréthane avec répartition homogène de la taille des cellules et pourcentage homogène d'alvéoles ouvertes

(30) Priorität: 25.03.2013 EP 13160745
(43) Veröffentlichungstag der Anmeldung: 01.10.2014
(73) Patentinhaber: Bayer MaterialScience AG, 51368 Leverkusen (DE)
(72) Erfinder: Böhnke, Lutz, 51491 Overath (DE); Beaujean, Joern, 51375 Leverkusen (DE); Albach, Rolf, 51061 Köln (DE)
(74) Vertreter: BIP Patents

(56) Entgegenhaltungen:
- EP-A1- 1 674 493
- DE-A1-102004 010 922

## Beschreibung

Die vorliegende Erfindung betrifft überwiegend offenzellige, kaltverformbare, Polyurethan-Hartschaumstoffe, die eine gleichmäßige Zellstruktur mit ähnlichen Zellgrößen und ähnlichen physikalischen Eigenschaften, insbesondere einer ähnlichen Offenzelligkeit besitzen. Diese sind zur Herstellung von Automobil-Innenverkleidungen, insbesondere Dachhimmeln und Säulenverkleidungen geeignet.

Polyurethan-(PUR)-Hartschaumstoffe als Zwischenschicht für Sandwichstrukturen (geformte Sandwichplatten) sowie deren Verwendung zur Herstellung von Automobil-Innenverkleidungen sind an sich bekannt.

Sandwichstrukturen zur Verwendung als Dachhimmel oder Säulenverkleidung werden heutzutage zumeist nach dem sogenannten Kaltformverfahren aus entsprechenden Sandwichplatten hergestellt. Dabei wird die PUR-Hartschaumstoffplatte beidseitig mit einem duromeren Klebstoff und Verstärkungsmaterialien, wie Glas- und/oder Naturfasermatten bzw. -vliesen und/oder Glasfaser-Rovings, sowie Deckschichten aus Papier, Thermoplastfolien und/oder Faservliesen und ggf. Dekorschichten versehen und in einem Werkzeug bei Temperaturen von 100 bis 150°C zu einem Sandwich verformt und verpresst.

Bei der diskontinuierlichen Herstellung von Schaumblöcken (sogenannte "Kistenverschäumung") unterscheiden sich die Zellgrößen und physikalischen Eigenschaften und insbesondere in der Offenzelligkeit, innerhalb eines Schaumblocks. Im unteren und oberen Bereich sind die Zellgrößen kleiner als in der Mitte. Die Zellgrößen im Zentrum eines Blocks sind im allgemeinen am größten. Bei der Verwendung von Isocyanaten und Polyolformulierungen, wie sie in EP 0437787 A1 beschrieben sind, unterscheiden sich die Zellgrößen innerhalb eines Schaumblocks in Abhängigkeit vom Ort deutlich voneinander. Die Offenzelligkeit und weniger stark ausgeprägt auch andere physikalische Eigenschaften schwanken ebenfalls. Man findet insbesondere bei Großblöcken von mehreren Kubikmetern Volumen und Höhen von ca. 1 m eine deutlich niedrigere Offenzelligkeit im unteren Bereich des Schaumblockes.

In EP 0437787 A1 werden thermoplastisch verformbare PUR-Hartschaumstoffe mit Dichten von 25-30 kg/m³ durch Umsetzung von Mischungen aus Diphenylmethandiisocyanaten (MDI) und Polyphenyl-polymethylen-polyisocyanaten (p-MDI) mit einem MDI-Gehalt von 70 bis 90 Gew.-%, bezogen auf die Isocyanatmischung, wobei 12-30 Gew.-% davon 2,4'-Diphenylmethandiisocyanat sind, und mit 10-30 Gew.-%, bezogen auf die Isocyanatmischung, Polyphenyl-polymethylen-polyisocyanaten (p-MDI) mit einer Polyolmischung aus 50 bis 70 Gew.-% (bezogen auf die Polyolformulierung) eines di- und/oder trifunktionellen Polyoxyalkylenpolyols mit einer Hydroxylzahl von 28 bis 600, 20 bis 35 Gew.-% eines difunktionellen Phthalsäurepolyesters mit einer Hydroxylzahl von 150 bis 440, 2 bis 10 Gew.-% Glycerin, 3,5 bis 7 Gew.-% Wasser, 0,3 bis 1 Gew.-% eines einbaufähigen tertiären Amin-Katalysators und 0,1 bis 2 Gew.-% eines Silicon-Schaumstabilisators hergestellt.

Diese Schäume zeigen allerdings beträchtliche Unterschiede in der Schaumstruktur, in Abhängigkeit vom Ort des Schaumblocks. Oben und unten sind die Schäume feinzelliger, d.h. die Zellgrößen sind kleiner und in der Mitte sind die Schäume grobzelliger, die Zellgrößen sind also größer. Dies beeinträchtigt die Weiterverarbeitung z.B. zu Autodachhimmeln. Der Schaumblock wird in Platten geschnitten, die in Abhängigkeit von ihrer Lage im Schaumblock unterschiedliche Zellgrößen im Vergleich untereinander aufweisen. Dies kann zu Komplikationen bei der Verarbeitung dieser Platten zu Sandwichstrukturen führen.

Die Aufgabe der vorliegenden Erfindung bestand darin, überwiegend offenzellige PUR Hartschäume mit einer möglichst homogenen Zellstruktur herzustellen. Die daraus hergestellten Platten sollen nach dem sogenannten Kaltformverfahren zu Sandwichstrukturen, z.B. Automobil-Innenverkleidungen und Automobildachhimmeln verpresst werden können.

Es wurde überraschend gefunden, dass durch den Einsatz von hexafunktionellen Polyoxyalkylenpolyolen die Zellgrößen innerhalb eines Schaumblocks sich deutlich weniger stark voneinander unterscheiden. Gleichzeitig sind auch die physikalischen Eigenschaften innerhalb eines Schawnblocks homogener, wodurch bei der Weiterverarbeitung zu Sandwichstrukturen z.B. die Kleberdosierung konstanter gehalten und damit der Ausschuss verringert werden kann.

Gegenstand der vorliegenden Erfindung sind überwiegend offenzellige, kaltformbare Polyurethan-(PUR)-Hartschaumstoffe mit >50 Vol.-% Offenzelligkeit gemäß DIN ISO 4590-86 und mit gleichmäßiger Zellstruktur, erhältlich durch Umsetzung einer technischen Polyisocyanatkomponente A) enthaltend
A1) 0 bis 10 Gew.-%, bevorzugt 0,1 bis 8 Gew.-%, besonders bevorzugt 0,1 - 5 Gew.-%, bezogen auf die organische Polyisocyanatkomponente A), 2,2'-Diphenylmethandiisocyanat,
A2) 0 bis 30 Gew.-%, bevorzugt 10 bis 25 Gew.-%, bezogen auf die organische Polyisocyanatkomponente A), 2,4'-Diphenylmethandiisocyanat und
A3) 25 bis 75 Gew.-%, bevorzugt 35 bis 55 Gew.-%, bezogen auf die organische Polyisocyanatkomponente A), 4,4'-Diphenylmethandiisocyanat, mit einer Komponente B bestehend aus
B1) 20 bis 70 Gew.-%, bevorzugt 25 bis 45 Gew.-%, bezogen auf die Komponente B, Polyoxyalkylenpolyolen mit einer Hydroxylzahl von 25 bis 60 mg KOH/g und einer zahlenmittleren Funktionalität von 2 bis 4,
B2) 20 bis 50 Gew.-%, bezogen auf die Komponente B, Polyoxypropylenpolyolen mit einer Hydroxylzahl von 300 bis 900 mg KOH/g und einer zahlenmittleren Funktionalität von 2,5 bis 4,
B3) 0 bis 25 Gew.-%, bevorzugt 5 bis 20 Gew.-%, bezogen auf die Komponente B,Polyoxyalkylenpolyolen mit einer Hydroxylzahl von 150 bis 550 mg KOH/g und einer Funktionalität von 2,
B4) 0 bis 20 Gew.-%, bezogen auf die Komponente B, Estergruppen-haltige Polyole mit einer Hydroxylzahl von 200 bis 500 mg KOH/g und einer zahlenmittleren Funktionalität von 2 bis 5,
B5) 0,1 bis 15 Gew.-%, bevorzugt 0,1 bis 5 Gew.-%, bezogen auf die Komponente B, Propylenoxid-Ethylenoxid-Copolymere mit einer Hydroxylzahl von 25 bis 200 mg KOH/g und einer Funktionalität von 5 bis 8, bevorzugt 6,
B6) 0 bis 3 Gew.-%, bezogen auf die Komponente B, Glycerin
B7) 1 bis 7 Gew.-%, bevorzugt 4 bis 6,5 Gew.-%, besonders bevorzugt 5,6 bis 6,6 Gew.-%, bezogen auf die Komponente B, Wasser,
B8) 0,5 bis 4 Gew.-%, bezogen auf die Komponente B, Katalysatoren
B9) gegebenenfalls Hilfs- und/oder Zusatzmittel,
wobei die NCO-Kennzahl 85 bis 125, bevorzugt 100 bis 120 beträgt und die Summe der Komponenten B1) bis B9) 100 Gew.-% beträgt.

Die NCO-Kennzahl ist das Verhältnis der Anzahl der NCO-Gruppen zu der Anzahl der NCOreaktiven Gruppen multipliziert mit 100.

Die erfindungsgemäßen Hartschaumstoffe werden zur Herstellung von Verbundelementen, vorzugsweise von Sandwichstrukturen verwendet.

Ein weiterer Gegenstand der Erfindung sind Verbundelemente, vorzugsweise Sandwichstrukturen, auf Basis der erfindungsgemäßen Hartschaumstoffe.

Die Hartschaumstoffe bzw. die damit hergestellten Verbundelemente werden vorzugsweise im Automobil- und Nutzfahrzeugbau, aber auch z. B. als Substrate für die Druckindustrie und als Trennwände für Bauanwendungen eingesetzt.

### Ermittlung der Zellgrößen

Die Zellgrößen und die Zellgrößenverteilung wurden folgendermaßen ermittelt:

Die Schaumstoffproben wurden mit einer Rasierklinge in ca. 3mm dicke Scheiben geschnitten. Mit einem Lichtmikroskop der Fa. Keyence wurden jeweils 5 Aufnahmen von der Schnittfläche der Schaumstoffproben im Durchlicht mit 16-facher Vergrößerung angefertigt. Die Zellendimensionen wurden mit Hilfe der Bildanalysesoftware "AnalySIS Pro" von Olympus vermessen.

Das arithmetische Mittel aller Durchmesser für die Winkel von 0° bis 179° in 1°-Schritten ergibt den mittleren Durchmesser einer einzelnen Zelle. Von jeder Schaumprobe wurden jeweils ca. 1000 einzelne Zellen vermessen, um statistisch relevante Werte zu erzielen. Aus den mittleren Durchmessern wurde der arithmetische Mittelwert, die Standardabweichung, der Median, der größte und kleinste Wert bestimmt.

Unter "überwiegend offenzellig" versteht man eine Offenzelligkeit nach DIN EN ISO 4590-1986 von 50% und mehr.

Unter "kaltformbar" versteht man, dass der Hartschaumsandwich nach dem bekannten Kaltformverfahren verformbar ist.

Die erfindungsgemäßen PUR-Hartschaumstoffe werden bevorzugt im diskontinuierlichen Verfahren hergestellt. Sie werden vorzugsweise zur Herstellung von Automobil-Innenverkleidungen, insbesondere Dachhimmeln und Säulenverkleidungen verwendet.

Als Polyisocyanat-Komponente werden vorzugsweise Mischungen aus 4,4'-, 2,4'- und 2,2'-Diphenylmethandiisocyanaten und Polyphenyl-polymethylen-polyisocyanaten (roh-MDI) eingesetzt. Besonders bewährt haben sich Roh-MDI-Typen mit einem Diphenylmethandiisocyanat-Isomerengehalt von 50 bis 70 Gew.-%.

Als Komponente B1) werden bevorzugt Polyoxyalkylenpolyole im Hydroxylzahlbereich von 25 bis 40 mg KOH/g verwendet, die vorzugsweise durch Umsetzung von Ethylenoxid und/oder Propylenoxid mit dreiwertigen Polyolen, wie z.B. Glycerin, Trimethylolpropan oder mit zweiwertigen Polyolen, wie z.B. Ethylenglycol, Wasser, 1,2-Propylenglycol, Neopentylglycol, Bisphenolen, und anderen zugänglich sind.

Als Komponente B2) werden vorzugsweise Polyoxyalkylenpolyole im Hydroxylzahlbereich von 380 bis 650 mg KOH/g verwendet, die vorzugsweise durch Umsetzung von Ethylenoxid und/oder Propylenoxid mit Polyolen, wie z.B. Glycerin, Trimethylolpropan, Triethanolamin, Ethylendiamin, ortho-Toluyldiamin, Mischungen aus Zucker und/oder Sorbit mit Glycolen u.a. zugänglich sind.

Als Komponente B3) werden difunktionelle Polyoxyalkylenpolyole im Hydroxylzahlbereich von 150 bis 550 verwendet, die bevorzugt durch Umsetzung von Ethylenoxid und/oder Propylenoxid mit Glycolen, wie z.B. Ethylen-, Diethylen-, 1,2- oder 1,3-Propylenglycol, 1,4-Butandiol, Neopentylglycol, Bisphenolen- und anderen zugänglich sind.

Als Komponente B4) finden bevorzugt Estergruppen-haltige Polyole im Hydroxylzahlbereich von 200 bis 500 mg KOH/g Verwendung, die bevorzugt durch Veresterung von Phthalsäureanhydrid, Terephthalsäure, Isophthalsäure, Glutar-, Bernstein-, und/oder Adipinsäure mit Ethylen-, Diethylen-, Propylenglycol, Butandiol, Hexandiol, Trimethylolpropan, Glyzerin und anderen hergestellt werden können. Besonders bevorzugt ist die Verwendung eines Umsetzungsproduktes aus Phthalsäureanhydrid, Diethylenglycol und Ethylenoxid.

Als Komponente B5) werden bevorzugt hexafunktionelle Propylenoxid-Ethylenoxid-Copolymere im Hydroxylzahlbereich von 25 bis 200 verwendet, die vorzugsweise durch Umsetzung von Ethylenoxid und Propylenoxid mit Sorbit und seinen Isomeren zugänglich sind. Besonders bevorzugt ist ein Anteil von ≥ 10 Gew.-% Ethylenoxideinheiten, bezogen auf (B5).

Zu den Katalysatoren (B8) gehören Verbindungen, die die Reaktion zur Herstellung des Schaumes beschleunigen. In Betracht kommen organische Metallverbindungen, vorzugsweise organische Zinnverbindungen, wie Zinn(II)-salze von organischen Carbonsäuren, beispielsweise Zinn(II)-acetat, Zinn(II)-octoat, Zinn(II)-ethyl-hexanoat, Zinn(II)-laurat und die Dialkylzinn(IV)-salze von organischen Carbonsäuren, beispielsweise Dibutylzinndiacetat, Dibutylzinndilaurat, Dibutylzinnmaleat, Dioctylzinndiacetat, Wismut- und Zinksalze sowie tertiäre Amine wie Triethylamin, Tributylamin, Dimethylcyclohexylamin, Dimethylbenzylamin, N-Methyl-imidazol, N-Methyl-, N-Ethyl-, N-Cyclohexylmorpholin, N,N,N',N'-Tetramethylethylendiamin, N,N,N',N'-Tetramethylbutylendiamin, N,N,N',N'-Tetramethyl-hexylendiamin-1,6, Pentamethyldiethylentriamin, Tetramethyl-diaminoethylether, Bis-(dimethylaminopropyl)-harnstoff, Dimethylpiperazin, 1,2-Dimethylimidazol, 1-Aza-bicyclo-[3,3,0]-octan, 1,4-Diaza-bicyclo-[2,2,2]-octan, und Alkanolaminverbindungen wie Triethanolamin, Tris-isopropanolamin, N-Methyl- und N-Ethyl-diethanolamin und Dimethylethanolamin. Als Katalysatoren kommen weiter in Betracht: Tris-(dialkylamino)-s-hexahydrotriazine, insbesondere Tris-(N,N-dimethylamino)-s-hexahydrotriazin, Tetraalkylammoniumsalze wie beispielsweise N,N,N-Trimethyl-N-(2-hydroxy-propyl)-ammonium-formiat, N,N,N-Trimethyl-N-(2-hydroxy-propyl)-ammonium-2-ethyl-hexanoat, Tetraalkyl-ammoniumhydroxide wie Tetramethylammoniumhydroxid, Alkalihydroxide wie Natriumhydroxid, Alkalialkoholate wie Natriummethylat und Kaliumisopropylat, sowie Alkali- oder Erdalkalisalze von Fettsäuren mit 1 bis 20 C-Atomen und gegebenenfalls seitenständigen OH-Gruppen.

Bevorzugt werden gegenüber Isocyanaten reaktionsfähige tertiäre Amine wie beispielsweise N,N-Dimethylaminopropylamin, Bis-(Dimethylaminopropyl)-amin, N,N-Dimethylaminopropyl-N'-methyl-ethanolamin, Dimethylaminoethoxyethanol, Bis-(Dimethylaminopropyl)amino-2-propanol, N,N-Dimethylaminopropyl-dipropanolamin, N,N,N'-Trimethyl-N'-hydroxyethyl-bisaminoethylether, N,N-Dimethylaminopropylharnstoff, N-(2-Hydroxypropyl)-imidazol, N-(2-Hydroxyethyl)-imidazol, N-(2-Aminopropyl)-imidazol, 2-((Dimethylamino)ethyl)methylaminopropanol, 1,1'-((3-(Dimethylamino)propyl)imino)bis-2-propanol und/oder die in EP-A 0 629 607 beschriebenen Umsetzungsprodukte aus Acetessigsäureethylester, Polyetherpolyolen und 1-(Dimethylamino)-3-amino-propan sowie insbesondere das Tallölsäure-Amidsalz des N,N-Dimethylaminopropylamins verwendet.

Als Hilfs- und/oder Zusatzmittel B9) können beispielsweise Farbmittel, Schaumstabilisatoren, anorganische Füllstoffe, Emulgatoren, Zellöffner und Flammschutzmittel verwendet werden.

Als Schaumstabilisatoren eignen sich beispielsweise Siloxan-Polyoxyalkylen-Copolymere, Organopolysiloxane, ethoxylierte Fettalkohole und Alkylphenole, Fettsäure-basierte Aminoxide und Betaine und Ricinusöl- bzw. Ricinolsäureester.

Als Zellöffner wirken beispielweise Paraffine, Polybutadiene, Fettalkohole und gegebenenfalls Polyalkylenoxid-modifizierte Dimethylpolysiloxane.

Weitere Beispiele von gegebenenfalls erfindungsgemäß mit zu verwendenden Hilfs- und/oder Zusatzmitteln B9) sind Emulgatoren, Reaktionsverzögerer, Stabilisatoren gegen Alterungs- und Witterungseinflüsse, Weichmacher, anorganische flammhemmende Substanzen, phosphor- und/oder halogenhaltige organische Flammschutzmittel, fungistatisch und bakteriostatisch wirksame Substanzen, Pigmente und Farbstoffe sowie die an sich bekannten üblichen organischen und anorganischen Füllstoffe. Als Emulgatoren seien beispielsweise genannt ethoxylierte Alkylphenole, Alkalimetallsalze von Fettsäuren, Alkalimetallsalze von sulfatierten Fettsäuren, Alkalimetallsalze von Sulfonsäuren und Salze von Fettsäuren und Aminen.

Nähere Angaben über Verwendungs- und Wirkungsweise der oben genannten Hilfs- und/oder Zusatzmittel sind z.B. im Kunststoff-Handbuch, Polyurethane, Band VII, Carl Hanser Verlag, München, Wien, 2. Auflage, 1983 beschrieben.

Der erfindungsgemäße Schaumstoff wird durch Vermischen der Polyolformulierung mit der Polyisocyanat-Komponente in der Regel in den Gew.-Verhältnissen von 100:150 bis 100:200 hergestellt. Üblicherweise erfolgt diese Vermischung mittels einer Niederdruck-Schäummaschine, z.B. einer Cannon C 300 oder Hennecke HK 5000 R. Die Blockherstellung erfolgt diskontinuierlich, indem das schätunfähige Gemisch in eine entsprechend große Kiste, deren Grundfläche von der späteren Größe des Autohimmels bestimmt ist, gegossen wird. Anschließend wird der Block in entsprechende Platten geschnitten, bzw. im Fachjargon in Platten gespalten.

Die Erfindung soll anhand der nachfolgenden Beispiele näher erläutert werden.

### Beispiele und Vergleichsbeispiele:

### Herstellung der PUR-Hartschaumstoffe:

### Beispiel 1

Eine Mischung (Komponente B) aus
30,0 Gew.-Teilen Polyetheralkohol (B1) auf Basis Glycerin/ Propylenoxid/ Ethylenoxid, OH-Zahl 28 mg KOH/g, Funktionalität 3,
34,0 Gew.-Teilen Polyetheralkohol (B2) auf Basis Trimethylolpropan/Propylenoxid, OH-Zahl 550 mg KOH/g, Funktionalität 3,
15,0 Gew.-Teilen Polyesteretheralkohol (B4) auf Basis Phthalsäureanhydrid/Diethylenglycol/Ethylenoxid, OH-Zahl 300 mg KOH/g, Funktionalität 2,
12,0 Gew.-Teilen Polyetheralkohol (B3) auf Basis Propylenglycol/ Propylenoxid, OH-Zahl 512 mg KOH/g, Funktionalität 2,
0,50 Gew.-Teilen Polyoxyalkylenpolyolen (B5), auf Basis Sorbit/ Propylenoxid/ Ethylenoxid, OH-Zahl 100 mg KOH/g und einer Funktionalität von 6
6,40 Gew.-Teilen Wasser (B7)
1,80 Gew.-Teilen eines wie in EP 0629607 A2 beschriebenen Umsetzungsproduktes aus Acetessigsäureethylester, Polyetherpolyolen und 1-(Dimethylamino)-3-amino-propan mit einer Funktionalität von ca. 2-3 und einer OH-Zahl von 111 mg KOH/g (B8)
0,30 Gew.-Teilen Silikon-Schaumstabilisator (Niax® Silicone SR 234 von Momentive Performance Materials) (B9),
0,50 Gew.-Teilen Schwarzpaste Isopur N der Firma ISL-Chemie in Kürten, DE (B9)
wurde mit
182 Gew.-Teilen eines technischen Isocyanates mit einem Anteil von ca. 14 Gew.-%, bezogen auf organische Polyisocyanatkomponente A), 2,4'-Diphenylmethandiisocyanat und von ca. 45 Gew.-%, bezogen auf organische Polyisocyanatkomponente A), 4,4'-Diphenylmethandiisocyanat, und einem NCO-Gehalt von 31,8 Gew.-% vermischt.

### Vergleichsbeispiel 1

Eine Mischung (Komponente B) aus
30,0 Gew.-Teilen Polyetheralkohol (B1) auf Basis Glycerin/ Propylenoxid/ Ethylenoxid, OH-Zahl 28 mg KOH/g, Funktionalität 3,
34,0 Gew.-Teilen Polyetheralkohol (B2) auf Basis Trimethylolpropan/Propylenoxid, OH-Zahl 550 mg KOH/g, Funktionalität 3,
15,0 Gew.-Teilen Polyesteretheralkohol (B4) auf Basis Phthalsäureanhydrid/Diethylenglycol/- Ethylenoxid, OH-Zahl 300 mg KOH/g, Funktionalität 2,
12,0 Gew.-Teilen Polyetheralkohol (B3) auf Basis Propylenglycol/ Propylenoxid, OH-Zahl 512 mg KOH/g, Funktionalität 2,
0,30 Gew.-Teilen Silikon-Schaumstabilisator (Niax® Silicone SR 234 von Momentive) (B9),
6,40 Gew.-Teilen Wasser (B7)
1,80 Gew.-Teilen eines wie in EP 0629607 A2 beschriebenen Umsetzungsproduktes aus Acetessigsäureethylester, Polyetherpolyolen und 1-(Dimethylamino)-3-amino-propan (B8),
0,50 Gew.-Teilen Schwarzpaste Isopur N der Firma ISL-Chemie in Kürten, DE (B9)
wurde mit
182 Gew.-Teilen eines technischen Isocyanates mit einem Anteil von ca. 14 Gew.-%, bezogen auf organische Polyisocyanatkomponente A), 2,4'-Diphenylmethandiisocyanat und von ca. 45 Gew.-%, bezogen auf organische Polyisocyanatkomponente A), 4,4'-Diphenylmethandiisocyanat, und einem NCO-Gehalt von 31,8 Gew.-% vermischt.

Man stellte Schaumstoffblöcke mit einer Blockgröße von 30cm x 30cm x 30cm her. Diese und Schaumstoffplatten von Großblöcken (1,4m x 2,2m x 1,0m) wurden geprüft und bewertet.

Hierzu wurden von den Schaumblöcken (30 x 30 x 30 cm) die unteren 5 cm abgeschnitten. Dieser Bereich besitzt im allgemeinen Störungen, die durch die Zellöffnung am Ende der Reaktion entstehen. Darüber wurde eine 1 cm dicke Schaumplatte für die Bestimmung der Zellgrößen (unten) herangezogen. Die darüber liegende 5 cm dicke Schaumplatte wurde zur Bestimmung der physikalischen Eigenschaften benutzt. Dann kommt eine 3 cm dicke Schicht die nicht verwendet wurde. Oberhalb davon liegt eine 1 cm dicke Schicht, bei der die Zellgrößen (Mitte) gemessen wurden. Darüber liegt eine ca. 5 cm Schicht zur Bestimmung der physikalischen Eigenschaften (Mitte), gefolgt von einer nicht verwendeten 4 cm dicken Schicht. Dann wurde eine 1 cm Platte zur Bestimmung der Zellgrößen (oben) und darüber eine max. 5 cm dicke Schicht abgetrennt, aus der die physikalischen Eigenschaften (oben) bestimmt wurden.

Die nachfolgende Tabelle 1 enthält die Zellgrößen (vermessen wie oben im Text beschrieben) aus Beispiel 1:

| | Anzahl Objekte | Anzahl Objekte | Anzahl Objekte | | |
|---|---|---|---|---|---|
| | 1004 | 990 | 1053 | | |
| **Zellgrößen** | **Oben** | **Mitte** | **Unten** | **Mittelwert** | **Standardabw.** |
| **D10** | 138 µm | 152 µm | 136 µm | 142,0 µm | 8,7 µm |
| **D25** | 192 µm | 213 µm | 188 µm | 197,7 µm | 13,4 µm |
| **D50** | 282 µm | 315 µm | 292 µm | 296,3 µm | 16,9 µm |
| **D75** | 409 µm | 445 µm | 428 µm | 427,3 µm | 18,0 µm |
| **D90** | 536 µm | 601 µm | 564 µm | 567,0 µm | 32,6 µm |
| | | | | | |
| **kleinster Messwert** | 85,6 µm | 62,8 µm | 63,1 µm | 70,5 µm | 13,1 µm |
| **größter Messwert** | 1598,1 µm | 1673,7 µm | 1316,3 µm | 1529,4 µm | 188,4 µm |
| **arithmetisches Mittel** | 321,5 µm | 358,2 µm | 331,5 µm | 337,0 µm | 19,0 µm |

D90 bedeutet, dass 90% aller Zellen aus dem oberen Bereich des Schaumblocks eine Größe bis 536 µm, bis 601 µm in dem mittleren Bereich und bis 564 µm im unteren Bereich des Schaumblocks besitzen. Das arithmetische Mittel ist der Mittelwert aus 1004 Einzelmessungen. Der in der fünften Spalte angegebene Mittelwert gibt den jeweiligen Mittelwert aus den drei links davon stehenden Zahlen an. Die entsprechende Standardabweichung beträgt 32,6 µm.

Analog bedeutet z.B. D25, dass 25% aller Zellen aus dem oberen Bereich eine Größe bis zu 192 µm, bis 213 µm in der Mitte und bis 188 µm im unteren Bereich des Schaumblocks haben.

D10, D50 und D75 bedeuten entsprechend, dass 10%, 50% bzw. 75% aller Zellen entsprechende Größen aus den drei Bereichen haben.

Die nachfolgende Tabelle 2 enthält die Zellgrößen des Vergleichbeispiels 1:

| | Anzahl Objekte | Anzahl Objekte | Anzahl Objekte | | |
|---|---|---|---|---|---|
| | 1180 | 976 | 1090 | | |
| **Zellgrößen** | **Oben** | **Mitte** | **Unten** | **Mittelwert** | **Standardabw.** |
| **D10** | 121 µm | 135 µm | 129 µm | 128,3 µm | 7,0 µm |
| **D25** | 169 µm | 188 µm | 185 µm | 180,7 µm | 10,2 µm |
| **D50** | 254 µm | 300 µm | 261 µm | 271,7 µm | 24,8 µm |
| **D75** | 374 µm | 445 µm | 377 µm | 398,7 µm | 40,2 µm |
| **D90** | 543 µm | 605 µm | 522 µm | 556,7 µm | 43,2 µm |
| | | | | | |
| **kleinster Messwert** | 73,2 µm | 87,0 µm | 71,8 µm | 77,3 µm | 8,4 µm |
| **größter Messwert** | 1634,5 µm | 1811,7 µm | 980,3 µm | 1475,5 µm | 437,9 µm |
| **arithmetisches Mittel** | 302,1 µm | 347,8 µm | 298,9 µm | 316,2 µm | 27,4 µm |

Werden die Hälfte der Zellen und mehr betrachtet (D50, D75, D90), wird die Zellgrößenverteilung durch den Einsatz von hexafunktionellem Polyetheralkohol signifikant homogener. Dieser Befund ist aus den angegebenen Standardabweichungen und auch bei visuellem Vergleich der verschiedenen Zellstrukturen direkt erkennbar.

Die nachfolgende Tabelle 3 enthält die physikalischen Eigenschaften aus Beispiel 1.

| **Prüfdaten** | **Norm** | | **Oben** | **Mitte** | **Unten** | **Mittel-wert** | **Standard-abw.** |
|---|---|---|---|---|---|---|---|
| Roh-dichte | DIN 53420 | kg/cm³ | 23,0 | 22,2 | 23,9 | 23,0 | 0,7 |
| Druckversuch | DIN EN826 | kPa | 84 | 99 | 111 | 98 | 11 |
| Offen-zelligkeit | DIN ISO 4590-86 | Vol.% | 79 | 75 | 72 | 75 | 3 |
| Zug-festigkeit | DIN 53430 | kPa | 179 | 173 | 181 | 178 | 3 |
| Bruchdehnung | DIN 53430 | % | 19 | 18 | 20 | 19 | 1 |

Die nachfolgende Tabelle 4 enthält die physikalischen Eigenschaften aus Vergleichsbeispiel 1.

| **Prüfdaten** | **Norm** | | **Oben** | **Mitte** | **Unten** | **Mittel-wert** | **Standard -abw.** |
|---|---|---|---|---|---|---|---|
| Rohdichte | DIN 53420 | kg/cm³ | 21,9 | 22,7 | 22,7 | 22,4 | 0,4 |
| Druckversuch | DIN EN826 | kPa | 90 | 110 | 108 | 103 | 9 |
| Offenzelligkeit | DIN ISO 4590-86 | Vol.% | 74 | 52 | 78 | 68 | 11 |
| Zugfestigkeit | DIN 53430 | kPa | 171 | 159 | 181 | 170 | 9 |
| Bruchdehnung | DIN 53430 | % | 19 | 18 | 22 | 20 | 2 |

Auch die physikalischen Eigenschaften (Zugfestigkeit und Bruchdehnung) werden insgesamt homogener. Insbesondere aber die Offenzelligkeit wird deutlich homogener, was die Weiterverarbeitung zu Sandwichstrukturen verbessert, indem die Mengen an aufzutragendem Kleber nicht ständig an sich veränderndes Eindringen von Kleber in offene Poren angepasst werden muss. Auch die konstantere Bruchdehnung ist von Vorteil, weil damit eine Anpassung des Einsatzes von Verstärkungsmaterialien seltener erfolgen muss und die Nachbearbeitung reduziert werden kann.

### Beispiel 2

Eine Mischung (Komponente B) aus
30,0 Gew.-Teilen Polyetheralkohol (B1) auf Basis Glycerin/ Propylenoxid/ Ethylenoxid, OH-Zahl 28 mg KOH/g, Funktionalität 3,
34,2 Gew.-Teilen Polyetheralkohol (B2) auf Basis Trimethylolpropan/Propylenoxid, OH-Zahl 550 mg KOH/g, Funktionalität 3,
15,0 Gew.-Teilen Polyesteretheralkohol (B4) auf Basis Phthalsäureanhydrid/Diethylenglycol/- Ethylenoxid, OH-Zahl 310 mg KOH/g, Funktionalität 2,
12,0 Gew.-Teilen Polyetheralkohol (B3) auf Basis Propylenglycol/ Propylenoxid, OH-Zahl 512 mg KOH/g, Funktionalität 2,
0,30 Gew.-Teilen Polyoxyalkylenpolyolen (B5), auf Basis Sorbit/ Propylenoxid/ Ethylenoxid, OH-Zahl 100 mg KOH/g, Funktionalität von 6
1,9 Gew.-Teilen Umsetzungsprodukt aus Acetessigsäureethylester, einem Polyetheralkohol auf Basis Trimethylolpropan/Propylenoxid (OH-Zahl 550 mg KOH/g) und 1-(Dimethylamino)-3-amino-propan analog EP 0 629 607 (B8)
0,30 Gew.-Teilen Silikon-Schaumstabilisator (Niax® Silicone SR 234 von Momentive Performance Materials) (B9),
5,8 Gew.-Teilen Wasser (B7)
0,5 Gew.-Teilen Schwarzpaste Isopur N (B9)
wurde mit
172 Gew.-Teilen eines technischen Isocyanates mit einem Anteil von ca. 21 Gew.-%, bezogen auf organische Polyisocyanatkomponente A), 2,4'-Diphenylmethandiisocyanat und von ca. 44 Gew.-%, bezogen auf organische Polyisocyanatkomponente A), 4,4'-Diphenylmethandiisocyanat, und einem NCO-Gehalt von ca. 31,9 Gew.-% vermischt.

### Vergleichsbeispiel 2

Eine Mischung (Komponente B) aus
30,0 Gew.-Teilen Polyetheralkohol (B1) auf Basis Glycerin/ Propylenoxid/ Ethylenoxid, OH-Zahl 28 mg KOH/g, Funktionalität 3,
34,5 Gew.-Teilen Polyetheralkohol (B2) auf Basis Trimethylolpropan/Propylenoxid, OH-Zahl 550 mg KOH/g, Funktionalität 3,
15,0 Gew.-Teilen Polyesteretheralkohol (B4) auf Basis Phthalsäureanhydrid/Diethylenglycol/- Ethylenoxid, OH-Zahl 310 mg KOH/g, Funktionalität 2,
12,0 Gew.-Teilen Polyetheralkohol (B3) auf Basis Propylenglycol/ Propylenoxid, OH-Zahl 512 mg KOH/g, Funktionalität 2,
1,9 Gew.-Teilen Umsetzungsprodukt aus Acetessigsäureethylester, einem Polyetheralkohol auf Basis Trimethylolpropan/Propylenoxid (OH-Zahl 550 mg KOH/g) und 1-(Dimethylamino)-3-amino-propan analog EP 0 629 607 (B8)
0,30 Gew.-Teilen Silikon-Schaumstabilisator (Niax® Silicone SR 234 von Momentive Performance Materials) (B9),
5,8 Gew.-Teilen Wasser (B7)
0,5 Gew.-Teilen Schwarzpaste Isopur N (B9)
wurde mit
172 Gew.-Teilen eines technischen Isocyanates mit einem Anteil von ca. 21 Gew.-%, bezogen auf organische Polyisocyanatkomponente A), 2,4'-Diphenylmethandiisocyanat und von ca. 44 Gew.-%, bezogen auf organische Polyisocyanatkomponente A), 4,4'-Diphenylmethandiisocyanat, und einem NCO-Gehalt von ca. 31,9 Gew.-% vermischt.

Die nachfolgende Tabelle enthält die physikalischen Eigenschaften aus Beispiel 2:

| **Prüfdaten** | **Norm** | | **Oben** | **Mitte** | **Unten** | **Mittelwert** | **Standardabw.** |
|---|---|---|---|---|---|---|---|
| Rohdichte | DIN 53420 | kg/cm³ | 23,9 | 25,9 | 22,8 | 24,20 | 1,57 |
| Druckversuch | DIN EN826 | MPa | 0,081 | 0,105 | 0,104 | 0,097 | 0,014 |
| Offenzelligkeit | DIEN SO 4590-86 | Vol.% | 84,9 | 89,7 | 80,4 | 85,03 | 4,66 |
| Zugfestigkeit | DIN 53430 | N/mm² | 0,245 | 0,172 | 0,198 | 0,205 | 0,037 |
| Bruchdehnung | DIN 53430 | % | 18,2 | 20,8 | 20,6 | 19,83 | 1,44 |

Die nachfolgende Tabelle enthält die physikalischen Eigenschaften aus Vergleichsbeispiel 2:

| **Prüfdaten** | **Norm** | | **Oben** | **Mitte** | **Unten** | **Mittelwert** | **Standard-abw.** |
|---|---|---|---|---|---|---|---|
| Rohdichte | DIN 53420 | kg/cm³ | 20,0 | 21,0 | 24,0 | 21,67 | 2,08 |
| Druckversuch | DIN EN 826 | MPa | 0,060 | 0,050 | 0,120 | 0,077 | 0,038 |
| Offenzelligkeit | DIN ISO 4590-86 | Vol.% | 85,7 | 90,1 | 74,8 | 83,5 | 7,86 |
| Zugfestigkeit | DIN 53430 | N/mm² | 0,185 | 0,212 | 0,248 | 0,215 | 0,032 |
| Bruchdehnung | DIN 53430 | % | 23,0 | 17,7 | 25,7 | 22,1 | 4,05 |

Der Vergleich von Beispiel 2 mit Vergleichsbeispiel 2 zeigt, dass der erfindungsgemäße Einsatz hexafunktioneller Polyole bereits in kleinen Mengen dazu führte, dass die Streuung der Rohdichte (repräsentiert durch die Standardabweichung) um 25% verbessert wurde. Die Streuung der Druckfestigkeit wurde um 63%, die Streuung der Offenzelligkeit um 40% und die Streuung der Bruchdehnung um 64% verbessert. Die verbesserte Homogenität der mechanischen Eigenschaften solcher Schaumstoffplatten hatte bei der Weiterverarbeitung erhebliche Vorteile, weil die Weiterverarbeitung nicht immer wieder an veränderte Eigenschaften angepasst werden musste, wie zum Beispiel die Aufnahme von Klebstoffen oder die Nutzung von Verstärkungsmaterialien bei der nachfolgenden Weiterverarbeitung.

## Patentansprüche

1. Überwiegend offenzellige, kaltformbare Polyurethan-(PUR)-Hartschaumstoffe mit >50 Vol.-% Offenzelligkeit gemäß DIN ISO 4590-86 und mit gleichmäßiger Zellstruktur, erhältlich durch Umsetzung einer technischen Polyisocyanatkomponente A) enthaltend
A1) 0 bis10 Gew.-%, bezogen auf die organische Polyisocyanatkomponente A), 2,2'-Diphenylmethandiisocyanat,
A2) 0 bis 30 Gew.-%, bezogen auf die organische Polyisocyanatkomponente A), 2,4'-Diphenylmethandiisocyanat und
A3) 25 bis 75 Gew.-%, bezogen auf die organische Polyisocyanatkomponente A), 4,4'-Diphenylmethandiisocyanat,
mit einer Komponente B bestehend aus
B1) 20 bis 70 Gew.-%, bezogen auf die Komponente B, Polyoxyalkylenpolyolen mit einer Hydroxylzahl von 25 bis 60 mg KOH/g und einer zahlenmittleren Funktionalität von 2 bis 4,
B2) 20 bis 50 Gew.-%, bezogen auf die Komponente B, Polyoxypropylenpolyolen mit einer Hydroxylzahl von 300 bis 900 mg KOH/g und einer zahlenmittleren Funktionalität von 2,5 bis 4,
B3) 0 bis 25 Gew.-%, bezogen auf die Komponente B, Polyoxyalkylenpolyolen mit einer Hydroxylzahl von 150 bis 550 mg KOH/g und einer Funktionalität von 2,
B4) 0 bis 20 Gew.-%, bezogen auf die Komponente B, Estergruppen-haltige Polyole mit einer Hydroxylzahl von 200 bis 500 mg KOH/g und einer zahlenmittleren Funktionalität von 2 bis 5,
B5) 0,1 bis 15 Gew.-%, bezogen auf die Komponente B, Propylenoxid-Ethylenoxid-Copolymere mit einer Hydroxylzahl von 25 bis 200 mg KOH/g und einer Funktionalität von 5 bis 8,
B6) 0 bis 3 Gew.-%, bezogen auf die Komponente B, Glycerin
B7) 1 bis 7 Gew.-%, bezogen auf die Komponente B, Wasser,
B8) 0,5 bis 4 Gew.-%, bezogen auf die Komponente B, Katalysatoren
B9) gegebenenfalls Hilfs- und/oder Zusatzmittel,
wobei die NCO-Kennzahl 85 bis 125, bevorzugt 100 bis 120 beträgt und die Summe der Komponenten B1) bis B9) 100 Gew.-% beträgt.

2. Verwendung der Polyurethan-Hartschaumstoffe gemäß Anspruch 1 zur Herstellung von Verbundelementen und Sandwichstrukturen.

3. Verwendung der Polyurethan-Hartschaumstoffe gemäß Anspruch 1 im Automobil- und Nutzfahrzeugbau, insbesondere von Automobil-Innenverkleidungen, Dachhimmeln und Säulenverkleidungen, als Substrate für die Druckindustrie und als Trennwände für Bauanwendungen.

4. Verbundelemente auf Basis der Polyurethan-Hartschaumstoffe gemäß Anspruch 1.

5. Sandwichstrukturen auf Basis der Polyurethan-Hartschaumstoffe gemäß Anspruch 1.

## Claims

1. Predominantly open-cell, cold-formable, rigid polyurethane (PU) foams with > 50 vol% open-cell content to DIN ISO 4590-86 and with uniform cell structure, obtainable by reacting a technical polyisocyanate component A) comprising
A1) 0 to 10 wt%, based on the organic polyisocyanate component A), of 2,2'-diphenylmethane diisocyanate,
A2) 0 to 30 wt%, based on the organic polyisocyanate component A), of 2,4'-diphenylmethane diisocyanate and
A3) 25 to 75 wt%, based on the organic polyisocyanate component A), of 4,4'-diphenylmethane diisocyanate,
with a component B consisting of
B1) 20 to 70 wt%, based on component B, of polyoxyalkylene polyols having a hydroxyl number of 25 5 to 60 mg KOH/g and a number-average functionality of 2 to 4,
B2) 20 to 50 wt%, based on component B, of polyoxypropylene polyols having a hydroxyl number of 300 to 900 mg KOH/g and a number-average functionality of 2.5 to 4,
B3) 0 to 25 wt%, based on component B, of polyoxyalkylene polyols having a hydroxyl number of 150 to 550 mg KOH/g and a functionality of 2,
B4) 0 to 20 wt%, based on component B, of polyols containing ester groups and having a hydroxyl number of 200 to 500 mg KOH/g and a number-average functionality of 2 to 5,
B5) 0.1 to 15 wt%, based on component B, of propylene oxide-ethylene oxide copolymers having a hydroxyl number of 25 to 200 mg KOH/g and a functionality of 5 to 8,
B6) 0 to 3 wt%, based on component B, of glycerol,
B7) 1 to 7 wt%, based on component B, of water,
B8) 0.5 to 4 wt%, based on component B, of catalysts
B9) optionally auxiliaries and/or adjuvants,
the NCO index being 85 to 125, preferably 100 to 120, and the sum of components B1) to B9) being 100 wt%.

2. Use of the rigid polyurethane foams according to Claim 1 for producing composite elements and sandwich structures.

3. Use of the rigid polyurethane foams according to Claim 1 in automotive and utility-vehicle construction, more particularly for automotive interior trim, roof linings and pillar trim, as substrates for the printing industry and as partition walls for building applications.

4. Composite elements based on rigid polyurethane foams according to Claim 1.

5. Sandwich structures based on rigid polyurethane foams according to Claim 1.

## Revendications

1. Mousses dures en polyuréthane (PUR) principalement à cellules ouvertes, façonnables à froid, présentant une proportion de cellules ouvertes, selon la norme DIN ISO 4590-86, > 50% en volume et une structure régulière de cellules, pouvant être obtenues par transformation d'un composant polyisocyanate de qualité technique A) contenant
A1) 0 à 10% en poids, par rapport au composant polyisocyanate organique A), de diisocyanate de 2,2'-diphénylméthane,
A2) 0 à 30% en poids, par rapport au composant polyisocyanate organique A), de diisocyanate de 2,4'-diphénylméthane,
A3) 25 à 75% en poids, par rapport au composant polyisocyanate organique A), de diisocyanate de 4,4'-diphénylméthane,
avec un composant B constitué par
B1) 20 à 70% en poids, par rapport au composant B, de polyoxyalkylènepolyols présentant un indice d'hydroxyle de 25 à 60 mg de KOH/g et une fonctionnalité numérique moyenne de 2 à 4,
B2) 20 à 50% en poids, par rapport au composant B, de polyoxypropylènepolyols présentant un indice d'hydroxyle de 300 à 900 mg de KOH/g et une fonctionnalité numérique moyenne de 2,5 à 4,
B3) 0 à 25% en poids, par rapport au composant B, de polyoxyalkylènepolyols présentant un indice d'hydroxyle de 150 à 550 mg de KOH/g et une fonctionnalité de 2,
B4) 0 à 20% en poids, par rapport au composant B, de polyols contenant des groupes ester présentant un indice d'hydroxyle de 200 à 500 mg de KOH/g et une fonctionnalité numérique moyenne de 2 à 5,
B5) 0,1 à 15% en poids, par rapport au composant B, de copolymères d'oxyde de propylène-oxyde d'éthylène polyoxyalkylènepolyols présentant un indice d'hydroxyle de 25 à 200 mg de KOH/g et une fonctionnalité de 5 à 8,
B6) 0 à 3% en poids, par rapport au composant B, de glycérol,
B7) 1 à 7% en poids, par rapport au composant B, d'eau,
B8) 0,5 à 4% en poids, par rapport au composant B, de catalyseurs,
B9) le cas échéant des adjuvants et/ou des additifs, l'indice NCO valant 85 à 125, de préférence 100 à 120 et la somme des composants B1) à B9) valant 100% en poids.

2. Utilisation des mousses dures de polyuréthane selon la revendication 1 pour la fabrication d'éléments composites et de structures en sandwich.

3. Utilisation des mousses dures de polyuréthane selon la revendication 1 dans la construction d'automobiles et de véhicules utilitaires, en particulier d'habillages intérieurs d'automobiles, de ciels de toit et d'habillages de colonnes, comme substrats pour l'industrie d'impression et comme parois de séparation dans la construction.

4. Éléments composites à base des mousses dures de polyuréthane selon la revendication 1.

5. Structures en sandwich à base des mousses dures de polyuréthane selon la revendication 1.
